# EUROPEAN PATENT SPECIFICATION

(11) **EP 1 588 364 B1**
(45) Date of publication and mention of the grant of the patent: **07.05.2008**
(21) Application number: 03780498.6
(22) Date of filing: 24.12.2003
(51) Int. Cl.: G11B 19/20, G11B 19/02, G11B 33/14

(54) **DISC DRIVE APPARATUS**
PLATTENLAUFWERK
APPAREIL DE LECTURE DE DISQUE

(30) Priority: 13.01.2003 EP 03075082
(43) Date of publication of application: 26.10.2005
(73) Proprietor: Koninklijke Philips Electronics N.V., 5621 BA Eindhoven (NL)
(72) Inventor: VAN DER KALL, Herman, P., NL-5656 AA Eindhoven (NL)
(74) Representative: Uittenbogaard, Frank
(86) International application number: PCT/IB2003/006272
(87) International publication number: WO 2004/064059

(56) References cited:
- US-A1- 2002 101 815
- PATENT ABSTRACTS OF JAPAN vol. 1999, no. 10, 31 August 1999 (1999-08-31) & JP 11 126472 A (NEC HOME ELECTRON LTD), 11 May 1999 (1999-05-11)
- PATENT ABSTRACTS OF JAPAN vol. 0172, no. 55 (P-1539), 20 May 1993 (1993-05-20) & JP 4 372731 A (OLYMPUS OPTICAL CO LTD), 25 December 1992 (1992-12-25)

## Description

The present invention relates in general to a disc drive apparatus for writing/reading information into/from a storage disc. The present invention relates particularly, but not exclusively, to a disc drive apparatus for writing/reading information into/from an optical storage disc; hereinafter, the present invention will be explained specifically for such disc drive apparatus, which will also be indicated as "optical disc drive".

As is commonly known, an optical storage disc comprises at least one track, either in the form of a continuous spiral or in the form of multiple concentric circles, of storage space where information may be stored. Optical discs may be read-only type, where information is recorded during manufacture, which data can only be read by a user. The optical storage disc may also be a writable type, where information may be stored by a user. Typical examples of optical discs are, for instance, CD, DVD. For writing information in the storage space of the optical storage disc, or for reading information from the disc, an optical disc drive comprises, on the one hand, rotating means for receiving and rotating an optical disc, and on the other hand optical means for scanning the storage track with an optical beam. Since the technology of optical discs in general, the way in which information can be stored in an optical disc, and the way in which optical data can be read from an optical disc, is commonly known, it is not necessary here to describe this technology in more detail.

Said optical means comprise a light beam generator device for generating said optical beam. Typically, the optical beam is a laser beam, and the light beam generator device comprises a laser, usually a laser diode. In the following, the present invention is explicitly explained for the case of a laser, but it is to be understood that the principles underlying the present invention also apply for other types of light beam generator devices.

During operation, the laser generates heat, and as a result, the laser temperature rises. This will especially be the case during a write operation, because the optical power needed for a write operation is higher than the optical power needed for a read operation. Apart from the design of the disc drive apparatus, the temperature rise depends *inter alia* on the rotational speed of the disc and on the duration of the operation. If the laser temperature rises too high, this may cause damage to the laser. The laser temperature should stay below a temperature specified by the manufacturer; usually, this temperature is 70 °C in the case of a DVD laser or 75 °C in the case of a CD laser.

Thus, there is a need to provide means for limiting the temperature rise of the laser. More generally, in a disc drive apparatus, there is a need to control the temperature occurring within the apparatus, especially the temperature of components which are temperature-sensitive.

In the prior art, fan devices have been proposed for generating a forced air flow past the laser, thus removing heat from the laser.

In an optical disc drive apparatus disclosed in JP-A-07-272.476, a separate fan is controlled to be switched ON when the laser is switched ON.

In an optical disc drive apparatus disclosed in US-B1-6.295.264, a separate fan is driven by the disc drive spindle motor.

In an optical disc drive apparatus disclosed in US-B2-6.359.856, a disc support is designed as a fan.

In an optical disc drive apparatus disclosed in JP-A-10-255.348, a ring-shaped fan is provided to the outer peripheral edge of the disc.

Such fans involve the disadvantages of increased weight, increased costs, and increased bulkiness.

Therefore, a main objective of the present invention is to provide means for limiting the temperature rise of the laser without necessarily adding to the material cost of the disc drive apparatus.

To this end, the present invention provides a method for controlling the operation of a disc drive apparatus, as well as a controller capable of executing the method. An important advantage of the present invention is that it can be implemented by suitably programming the controller, i.e. by suitably adapting the software, although it is also possible to implement the present invention in hardware or firmware.

Prior art apparatuses which rely on an air flow generated by the rotating disc during writing/reading have a disadvantage that the cooling action only takes place during actual writing/reading, and that the cooling capacity of the generated air flow depends on the rotational speed of the disc. Typically, the rotational (or linear) speed of the disc is controlled for optimum optical performance, i.e. optimum reading or writing performance. Usually, this speed is not optimal for cooling purposes. For a CD, a standard speed (1X) is 3.5-8 Hz. A typical speed for recording is 2.4X. A typical speed for reading may be in the range from 3,5 to 160 Hz. For a DVD, a typical speed for recording may nowadays be in the range from 12 to 100 Hz. Depending on apparatus design, an optimal speed with a view to cooling is in the range from 50 to 100 Hz, typically about 85 Hz.

According to one aspect of the present invention, benefit is taken from the cooling effect of a rotating disc separate from a writing/reading action. According to this aspect of the present invention, the disc drive is capable of operating in a fan mode, wherein the disc motor is driven for rotation but no writing/reading action is taking place. In the case of an optical disc, specifically, the laser is off during the fan mode. Preferably, other power dissipating and heat generating components of the disc drive, such as for instance servo actuators, are switched off during the fan mode. The rotating disc generates an air flow cooling the components within the apparatus housing, especially (in the case of an optical disc) the laser. Preferably, the disc drive motor is driven at a predetermined optimum speed, which may be an apparatus-specific speed, and which may deviate from an optimum speed for writing/reading.

Thus, the cooling of the laser after writing/reading operation is improved, and, when a next command for writing/reading is received, the laser temperature has dropped more than without the cooling down measure proposed by the present invention, so that it will take longer for the laser to reach a critical temperature. In effect, the present invention may prevent the laser from reaching a critical temperature, even in the case of prolonged use.

In one embodiment of the invention, the temperature of the laser is measured at the termination of a writing/reading operation of the disc drive apparatus. Normally, the apparatus would now become idle; however, in accordance with the present invention, if it is found that the laser temperature exceeds a first predetermined safety temperature, the apparatus enters the fan mode, such that the rotating disc keeps generating an air flow cooling the laser. The speed of the disc drive motor may be predetermined for optimum cooling, but it is also possible that the speed of the disc drive motor is predetermined with a view to low audibility, for instance 40 Hz, in order to prevent to annoy users who expect the apparatus to be idle.

In another embodiment of the invention, the temperature of the laser is monitored during operation of the laser. If it is found that a certain decision criterion is met, the laser operation is stopped (i.e. the process of optical writing or reading is stopped), and the apparatus enters the fan mode. Thus, the laser temperature is prevented from rising too high during operation.

In a particular embodiment of the invention, the temperature of the laser is monitored continuously, at regular intervals, i.e. not only during operation of the laser (as mentioned above) or at the termination of a writing/reading operation of the disc drive apparatus (as mentioned earlier), but even when the disc has been removed from the disc drive apparatus after a write action. If, with the disc removed, it appears that the laser temperature is above a predetermined safety temperature (which may be equal to said first predetermined safety temperature), the disc motor is actuated so that the disc support is rotated: even if the disc is absent, the rotating motor support will generate an air flow which has some cooling effect.

In order to exit the fan mode, it is possible to monitor the laser temperature and to terminate the fan mode as soon as it is found that the temperature has dropped sufficiently. Alternatively, and currently preferred, it is possible that the fan mode always has a predetermined duration; a suitable value is about 10 minutes when a disc is present, and longer, typically in the order of about 15 minutes, when no disc is present.

It is acknowledged that it is known per se in prior art that the air flow generated by the rotating disc can be used for cooling the laser. JP-A-11.025.667 discloses a disc drive apparatus provided with a specially adapted guiding plate (hardware adaptation) for guiding such air flow towards the optical head.

According to another aspect of the present invention, the disc drive is capable of operating in a Duty Cycle mode, wherein the disc motor is continuously driven for rotation while a writing/reading action is alternatingly on or off. In one time segment of a cycle, the writing/reading action is taking place as usual. In another time segment of a cycle, the disc drive is actually operating in a fan mode, wherein the disc drive speed is preferably the same as during the first time segment, such that the disc drive speed is substantially constant during a cycle. As a result, the amount of heat generated by the laser and other components is reduced on average, while the cooling effect of the rotating disc is continued, so that a further temperature rise will be slower or, ideally, the temperature will lower.

In an exemplary embodiment, the cycle has a duration of 5 sec, and both time segments have equal duration (duty cycle = 50%).

The present invention can be applied in a disc drive apparatus which has no other means of influencing laser temperature. However, the present invention is not restricted to such application. In fact, it is quite well possible to use the invention, for instance, in an apparatus of which the disc support and/or the housing are adapted for improved air flow generation or air flow guidance.

These and other aspects, features and advantages of the present invention will be further explained by the following description of preferred embodiments of the present invention with reference to the drawings, in which same reference numerals indicate same or similar parts, and in which:
Figure 1 is a block diagram schematically illustrating an optical disc drive;
Figure 2 is a table illustrating operation of the optical disc drive in accordance with the present invention.

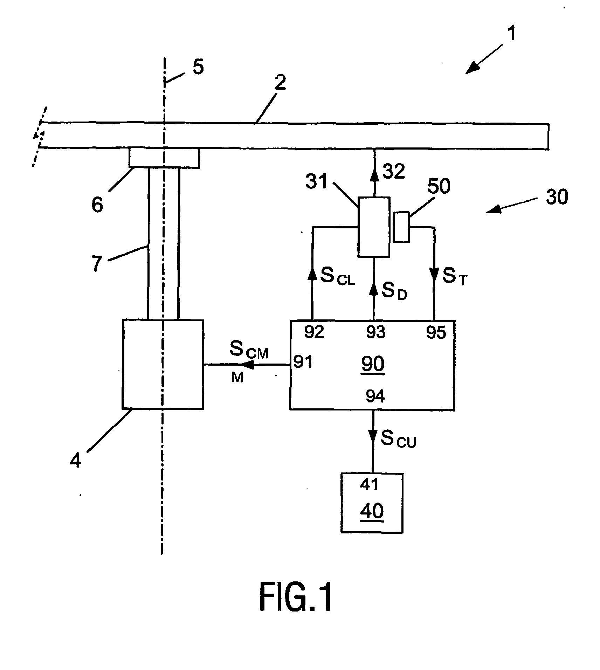

Figure 1 schematically illustrates an optical disc drive 1, suitable for storing information on or reading information from an optical disc 2. For rotating the disc 2, the disc drive apparatus 1 comprises a motor 4, defining a rotation axis 5. For receiving and holding the disc 2, the disc drive apparatus 1 may comprise a turntable or clamping hub 6, which in the case of a spindle motor 4 is mounted on the spindle axle 7 of the motor 4.

The disc drive apparatus 1 further comprises an optical system 30 for scanning tracks (not shown) of the disc 2 by an optical beam. More specifically, the optical system 30 comprises a light beam generating means 31, typically a laser such as a laser diode, which is arranged to generate a light beam 32 which is directed towards and focussed onto the disc 2 by optical means which may be known per se and which are not shown for the sake of simplicity. As is well known to a person skilled in the art, during a writing process, the laser beam intensity is modulated in order to produce changes in disc material properties, while during a reading process, the reflected light is received by an optical detector (not shown for the sake of simplicity), wherein intensity fluctuations of the reflected light correspond to information. Since the present invention is not related to the writing and/or reading process as such, it is not necessary here to discuss these processes, or the corresponding components used, in greater detail.

Likewise, the disc drive apparatus 1 further comprises means for displacing the beam focus in a radial direction, which displacement means are also not shown for the sake of simplicity, while further it is not necessary here to discuss the design and operation of such displacement means in great detail.

The disc drive apparatus 1 further comprises a control unit 90 having a first control output 91 connected to a control input of the motor 4, and having a second control output 92 coupled to a control input of the laser 31. A signal output 93 of the control unit 90 is coupled to a signal input of the laser 31.

Other functional units of the disc drive apparatus 1 are generally and in common indicated as a controllable unit 40. Examples of such functional units, typically implemented as ICs, are signal processing units, focus actuator, radial actuator, servo drivers, encoders, decoders, photodiode, etc. The control unit 90 further has one or more control outputs coupled to control inputs of one or more of said other functional units. These one or more control outputs are generally indicated in common as third control output 94 coupled to a control input 41 of the controllable unit 40.

The control unit 90 is designed to generate at its first output 91 a motor control signal S_{CM} for controlling the motor 4, to generate at its second control output 92 a laser control signal S_{CL} for controlling the laser 31, and to generate at its third control output 94 a unit control signal S_{CU} for controlling the controllable unit 40. With the motor control signal S_{CM}, the control unit 90 is capable to switch the disc drive motor 4 on or off, and to set the rotational speed of this motor. With the laser control signal S_{CL}, the control unit 90 is capable to switch the laser 31 on or off. If the laser is operating in its ON mode, the laser 31 generates its laser beam 32 in accordance with a laser data signal S_{D} generated by the control unit 90 at its signal output 93. With the unit control signal S_{CU}, the control unit 90 is capable to switch the controllable unit 40 on or off.

The disc drive apparatus 1 further comprises temperature detecting means 50, preferably associated with the laser 31, as shown, designed to generate a measuring signal S_{T} corresponding to the measured temperature, in this case the temperature of the laser 31. The measuring signal S_{T} is coupled to a temperature signal input 95 of the control unit 90. The temperature detecting means 50 may be implemented in any suitable way, as will be known to a person skilled in the art. Further, the design of the temperature detecting means 50 is no subject of the present invention, and a conventional temperature detecting means may be utilised in the present invention. Therefore, it is not necessary here to discuss in great detail the design and operation of the temperature detecting means 50.

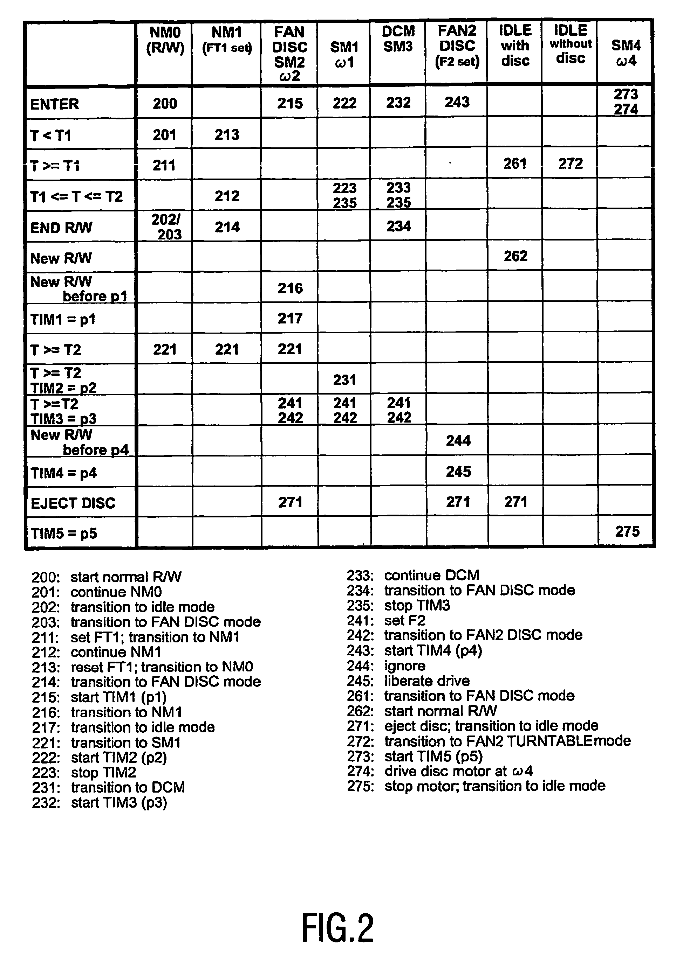

The control unit 90 is capable of operating in at least one normal mode and several safety modes, as will be explained in the following with reference to figures 1 and 2. In a normal mode, also indicated as NM, the control unit 90 allows the controllable unit 40 to be switched on, as desired, and sets the operating speed of the motor 4 in accordance with requirements which are not related to temperature control, i.e. requirements such as vibrations, noise, error rate, data flow rate, etc. In fact, the normal mode might be considered as prior art mode.

In a first safety mode, also indicated as SM1, the control unit 90 generates its motor control signal S_{CM} such that the rotational speed of the motor 4 is set at a first predetermined safety value ω1. This first predetermined safety value ω1 is predetermined as being optimal for cooling in combination with a reading operation or a writing operation, respectively. The actual value of the first predetermined safety value ω1 may depend on the type of disc drive apparatus: for instance, for a DVD apparatus, the actual value of ω1 needs not necessarily be equal to the actual value of ω1 for a CD apparatus. But also, between CD apparatuses of different design the actual value of ω1 may mutually differ; the same applies to DVD apparatuses of different design. In general, the first predetermined safety value ω1 may for instance be in the range from 50-100 Hz; in a typical example of an experimental DVD apparatus, the first predetermined safety value ω1 appeared to be approximately equal to 85 Hz.

It is noted that, in principle, the first predetermined safety value ω1 is one of the possible rotational speeds potentially selectable for the control unit 90. As such, this speed is a "normal" speed. However, as defined above, the control unit 90 selects the rotational speed in the normal mode NM without taking temperature control into account, whereas the control unit 90 does select the rotational speed in the first safety mode SF1 with a view to temperature control. Nevertheless, it may be that in the normal mode NM the rotational speed is equal to the first predetermined safety value ω1.

It is further noted that there may be a difference between theoretically optimum speed and practically optimum speed. It may be that a theoretically optimum rotational speed exists, which would be optimum for cooling purposes, but which is not available to the control unit 90 because the disc drive apparatus does not support such speed, at least not in combination with a writing operation or a reading operation, as the case may be. In the above definition of the first predetermined safety value ω1, the wording "optimal" is to be understood as meaning "practically optimum", i.e. optimal within the range practically available to the control unit 90.

It is further noted that, even within the same apparatus, there may be a difference between optimum speed in the case of writing and optimum speed in the case of reading, but it may also be that these two optimum speeds are substantially equal (as was the case with the above-mentioned experimental DVD apparatus). In the remainder of this text, this difference will not be mentioned any more, and the wording "optimal" is to be understood as meaning optimal in the context of present operation (write/read). The same applies, *mutatis mutandis,* to the fact whether writing/reading should be done in constant linear velocity mode or in constant angular velocity mode.

Finally, it is noted that during normal operation, the rotational speed is usually selected as high as possible, such that the first predetermined safety value ω1 will normally be lower than (or equal to) the normal operating speed. In such case, a transition from the normal mode NM to the first safety mode SF1 will involve a reduction of speed. This scenario will typically apply in the case of reading a CD-ROM. However, such is not necessarily always the case, so it may be that a transition from the normal mode NM to the first safety mode SF1 will involve an increase of speed.

In a second safety mode, also indicated as SM2 or FAN DISC mode, the control unit 90 generates its motor control signal S_{CM} such that the rotational speed of the motor 4 is set at a second predetermined safety value ω2. This second predetermined safety value ω2 is predetermined as being optimal for cooling with a disc present but without a reading or writing operation. Further, the control unit 90 generates its laser control signal S_{CL} such as to switch OFF the laser 31. Further, the control unit 90 generates its unit control signal S_{CU} such as to switch OFF the controllable unit 40.

In this mode, most of the power dissipating and hence heat generating devices (ICs) are shut down, while cooling by the rotating disc continues. However, internal communication within the disc drive remains alive, so that the control unit 90 is, for instance, able to recognize any new write command.

Similarly as mentioned above with respect to the first predetermined safety speed ω1, the actual value of the second predetermined safety speed ω2 may depend on the type of disc drive apparatus, apparatus design, range of speed available to the control unit 90, etc, as should now be clear to a person skilled in the art.

In a preferred embodiment, the second predetermined safety speed ω2 is predetermined as being optimal for cooling in combination without a reading or writing operation and also in combination with a low noise requirement. Without taking into account such low noise requirement, the actual value of the second predetermined safety speed ω2 may be within an audible range, for instance 85 Hz. This may, however, be annoying to a user, who expects his drive to be silent when idle, and who now may wonder whether something is wrong. In order to prevent this, a low noise requirement may be set, requiring the rotational speed to stay below, for instance, 50 Hz, so that in such case the actual value of the second predetermined safety speed ω2 may for instance be 40 Hz.

In another example, it may be that the disc drive has a first speed range where relatively much noise is produced and a second speed range where relatively little noise is produced; in such case, the actual value of the second predetermined safety speed ω2 may preferably be selected outside such first range, more preferably inside such second range.

In a third safety mode, also indicated as SM3 or duty cycle mode DCM, the control unit 90 is alternatingly operative in a normal mode portion NMP and in an energy saving mode portion ESMP.

In the normal mode portion NMP of the duty cycle mode DSM, the rotational speed of the disc may be set at any value within the range available to the control unit 90. Preferably, however, the rotational speed of the disc is set at the above-mentioned first predetermined safety speed ω1, so that in this respect the normal mode portion NMP corresponds to the first safety mode SM1.

In the energy saving mode portion ESMP of the duty cycle mode DSM, any writing or reading operation is suspended, the laser 31 is switched OFF, the energy consuming controllable unit 40 is switched OFF, but the disc motor activation continues. Thus, benefit is taken from the cooling action of the rotating disc.

In the energy saving mode portion ESMP, the rotational speed of the disc may be increased or decreased, as required, to the above-mentioned second predetermined safety speed ω2, so that in this respect the energy saving mode portion ESMP corresponds to the second safety mode SM2. However, this would involve repeatedly speeding up and down of the disc motor, with associated audible frequency changes, which is not preferred: preferably, in the energy saving mode portion ESMP, the value of the rotational speed of the disc is maintained at the value set in the normal mode portion NMP just before entering the energy saving mode portion ESMP, so that the rotational speed of the disc is maintained substantially constant during the duty cycle mode DSM.

Thus, the control unit 90 runs through a cycle of operating successively in normal mode, energy saving mode, normal mode again, etc. Each cycle has a predetermined duration, which may for instance be selected in the range of 1-10 sec; a suitable value is in the order of about 5 sec.

The duty cycle of said mode cycle may have a value of 50%, i.e. the duration of each normal mode portion is equal to the duration of each energy saving mode period. However, it is also possible to set a different value for the duty cycle, either favouring normal mode or favouring energy saving mode.

In a fourth safety mode, also indicated as SM4 or FAN TURNTABLE mode, the control unit 90 generates its motor control signal S_{CM} such that the rotational speed of the motor 4 is set at a fourth predetermined safety value ω4. This fourth predetermined safety value ω4 is predetermined as being optimal for cooling without a disc present, so that a cooling air flow is generated by the rotating turntable only. This mode is intended for situations where no disc is present, in which cases the laser 31 is switched OFF. Further, the control unit 90 generates its unit control signal S_{CU} such as to switch OFF the controllable unit 40.

In this mode, most of the power dissipating and hence heat generating devices (ICs) are shut down, while cooling continues by the rotating turntable or the like. However, internal communication within the disc drive remains alive, so that the control unit 90 is able to recognize commands, like "open door".

Again, the actual value of the fourth predetermined safety value ω4 may depend on the type of disc drive apparatus, apparatus design, range of speed available to the control unit 90, etc, as should now be clear to a person skilled in the art. Typically, the actual value of the fourth predetermined safety value ω4 may be higher than the second predetermined safety speed ω2, since the rotating turntable, without a disc, will generate hardly or no noise. A suitable value for the fourth predetermined safety value ω4 may be in the order of 80-100 Hz.

Figure 2 is a table, schematically illustrating control steps taken by control unit 90 when performing a control method in accordance with the present invention. Each vertical column corresponds to an operating mode of the control unit 90. Each horizontal row corresponds to a situation occurring during operation. Each field corresponds to a step taken by the control unit 90.

Assume that, initially, the control unit 90 is operating in a writing or reading operation in normal mode NM, illustrated as NM0. The rotational speed ω may have any suitable value as set by the control unit 90, and will typically, although not necessarily, differ from the first predetermined safety speed ω1. At regular intervals, for instance once every ten seconds, the control unit 90 will check the temperature signal S_{T} received from the temperature sensor 50, and will compare the measured temperature T to a first predetermined threshold temperature T1, which may for instance be about 60 °C. As long as the measured temperature T remains below said first predetermined threshold temperature T1, the control unit 90 will continue with the writing or reading operation in the normal mode NM0 (action 201). When the writing or reading operation is completed, the control unit 90 will, as usual, shut down the laser 31 and the controllable unit 40, and make a transition to an idle mode (step 202).

As soon as the measured temperature T exceeds said first predetermined threshold temperature T1, the control unit 90 will set a first flag FT1 (step 211). The writing or reading operation in normal mode continues, now with the first flag FT 1 set, illustrated as NM1. The control unit 90 will continue to monitor the temperature at regular intervals. As long as the measured temperature T is above said first predetermined threshold temperature T1, but stays below a second predetermined threshold temperature T2 higher than T1, which second predetermined threshold temperature T2 may for instance be about 70 °C, the control unit 90 will continue with the writing or reading operation in the normal mode NM and the first flag FT1 set (action 212).

It is possible that, if the measured temperature T drops below said first predetermined threshold temperature T1, the control unit 90 will reset the first flag FT1 (step 213) and continue with the writing or reading operation in the normal mode NM0 (action 201), but it is also possible that the control unit 90 will keep the first flag FT1 set anyway.

It is noted that step 202 may comprise the step of checking the temperature once more and, if it is found that the measured temperature T is now above said first predetermined threshold temperature T1, making a transition to the second safety mode SM2 (step 203).

Now, when the writing or reading operation is completed while the first flag FT1 is set, the control unit 90 will make a transition to the second safety mode SM2 or FAN DISC mode discussed above (step 214).

As mentioned earlier, the control unit 90 may exit the second safety mode SM2 when the measured temperature T drops below a threshold, which may be equal to said first predetermined threshold temperature T1. However, in the preferred embodiment, the control unit 90 will, on entry of the second safety mode SM2, start a first timer TIM1 (step 215) in order to stay in the second safety mode SM2 for a first predetermined period p1 determined by said first timer TIM1. This predetermined period p1 may suitably be about 10 min.

When a new write/read command is received while said predetermined period p1 has not yet passed, i.e. when the control unit 90 is still operating in the FAN DISC mode SM2, the control unit 90 will make a transition to the normal mode NM1, i.e. start the write/read operation with the first flag FT1 set (step 216).

As soon as the first timer TIM1 value indicates that such predetermined period p1 has passed, the control unit 90 will exit the FAN mode SM2, i.e. shut down the drive motor 4 and make a transition to an idle mode (step 217).

In the idle mode, the control unit 90 may continue to monitor the temperature at regular intervals, for instance once every ten seconds: If it is found that the measured temperature T is above said first predetermined threshold temperature T1, the control unit 90 will make a transition to the FAN DISC mode SM2 (step 261). When, in the idle mode, a new write/read command is received, the control unit 90 will make a transition to normal mode NM0 (step 262) and start with the normal write or read operation (action 200).

As soon as the measured temperature T exceeds said second predetermined threshold temperature T2, the control unit 90 will enter the first safety mode SM1 (step 221). Thus, the rotational speed ω is now made equal to the first predetermined safety speed ω1, involving an increasing or decreasing of the rotational speed, as the case may be.

On entry of the first safety mode SM1, the control unit 90 will start a second timer TIM2 (step 222) defining a second predetermined period p2, which may for instance be 5 min. The control unit 90 continues to monitor the temperature. If the measured temperature T drops below said second predetermined threshold temperature T2, the control unit 90 will stop said second timer TIM2 (step 223).

If the second predetermined period p2 ends while the temperature is still above said second predetermined threshold temperature T2, the control unit 90 will make a transition to the third safety mode SM3 or duty cycle mode DCM discussed above (step 231). It is noted that the duty cycle mode DCM may not be available to certain types of drives. For instance, in the case of a CD write operation, it may be undesirable to interrupt the writing process, because it is very difficult to achieve seamless recording.

On entry of the duty cycle mode DCM, the control unit 90 will start a third timer TIM3 (step 232) defining a third predetermined period p3, which may for instance be 5 min.

The control unit 90 continues to monitor the temperature. If the measured temperature T drops below said second predetermined threshold temperature T2, the control unit 90 may stop said third timer TIM3 and return to the first safety mode SM1. However, it is preferred that the duty cycle mode DCM is continued, even if the measured temperature T drops below said second predetermined threshold temperature T2, for as long as the present write/read operation takes (action 233).

If the write/read operation is completed before said third predetermined period p3 has passed, the control unit 90 makes a transition to the FAN DISC mode SM2 (step 234).

In any case, if the measured temperature T drops below said second predetermined threshold temperature T2, the control unit 90 stops said third timer TIM3 (step 235).

Further, if during write/read operation in the first safety mode SM1 or the duty cycle mode DCM, or during cooling in the FAN DISC mode SM2, the third predetermined period p3 ends while the measured temperature T is still above said second predetermined threshold temperature T2, the control unit 90 will set a second flag F2 (step 241), and will make a transition (step 242) to the FAN DISC mode, now indicated as FAN2 DISC. Thus, in cases where the temperature appears to stay above the said second predetermined threshold temperature T2 for too long, indicating that earlier measures such as optimum speed (SM1) and/or duty cycle mode (SM3) achieve insufficient effect, the disc drive is effectively shut down and further write/read is prevented in order to avoid possible damage to the apparatus. Cooling by the rotating disc continues.

In this case, the control unit 90 will also start (step 243) a fourth timer TIM4 defining a fourth predetermined period p4, which may for instance be 10 min. If during this period a new write/read command is received, it will be ignored (step 244) in order to allow the apparatus to cool sufficiently. As soon as the fourth timer TIM4 value indicates that such fourth predetermined period p4 has passed, the control unit 90 will reset the first and second flags FT1 and F2 and "liberate" the drive (step 245). When a new write/read command is received, the control unit 90 will start in normal mode NM (action 200).

If the control unit receives a command to eject the disc, it will make a transition to an idle mode (step 271). In the idle mode, the control unit 90 preferably continues to monitor the temperature at regular intervals, for instance once every ten seconds. If it is found that the measured temperature T is above a predetermined threshold temperature, advantageously said first predetermined threshold temperature T1, the control unit 90 will make a transition to the FAN2 TURNTABLE mode SM4 (step 272), where the disc motor is activated at a speed ω4. Now, the rotating motor support or turntable will generate an air flow which has some cooling effect. The motor may be stopped when the temperature drops below said threshold temperature. Preferably, however, this fourth safety mode SM4 is maintained during a predetermined time p5 as determined by a fifth timer TIM5 started by the control unit 90 on entry of the fourth safety mode SM4. As soon as the fifth timer TIM5 value indicates that said predetermined period p5 has passed, the control unit 90 will stop the disc motor and will make a transition to the idle state (step 275).

Although the above describes a control method presently preferred, it should be clear to a person skilled in the art that the present invention is not limited to the exemplary embodiments discussed above, but that various variations and modifications are possible within the protective scope of the invention as defined in the appending claims.

For instance, instead of monitoring the laser temperature, it is possible that the temperature of another critical component is monitored, or even that a temperature sensor is arranged at a location within the apparatus for monitoring a local ambient temperature.

In the embodiment as described, on finding a measured temperature above the second threshold temperature T2, control first lowers the speed to an optimum speed (step 221) and, if after some predetermined time (p2) it appears that this action does not help in lowering the temperature below said second threshold temperature T2, control makes a transition to the duty cycle mode (step 231). However, it is also possible that control makes a transition to the duty cycle mode immediately on finding a measured temperature above the second threshold temperature T2. Further, it is also possible that control makes a transition to the FAN mode immediately on finding a measured temperature above the second threshold temperature T2.

Further, it is possible that transition from normal mode to the different safety modes is triggered by different temperature levels.

Further, it should be clear that the expression "optical disc" also applies to magneto-optical discs.

Further, it is noted that the temperature may be measured in the case of a specific event, such as the end of a read/write operation, but preferably the temperature is measured continuously, at regular intervals.

It is noted that in this text the reference numeral 40 and the phrase "controllable unit" are used to indicate those functional units which are actually switched on or off by the control unit 90. The disc drive apparatus may comprise further functional units which are not switched off in the FAN mode.

## Claims

1. Disc drive apparatus (1) for writing and/or reading information into and/or from a disc (2), comprising:
a controllable motor (4) for rotating a disc (2);
a control unit (90) having a first output (91) for generating a control signal (S_{CM}) for said motor (4);
wherein the control unit (90) is designed to be capable of operating in a FAN mode (SM2) in which said motor (4) is rotated without writing operations and without reading operations and without servo operations being executed by the disc drive apparatus.

2. Disc drive apparatus according to claim 1, further comprising temperature measuring means (50) for generating a measuring signal (S_{T}) indicating a temperature (T) occurring within the disc drive apparatus, the temperature measuring means (50) preferably being arranged for measuring the temperature of a disc drive component; wherein said control unit (90) has a signal input (95) coupled to said temperature measuring means (50), and is designed to enter said FAN mode (SM2) in response to the measuring signal (S_{T}) received from said temperature measuring means (50).

3. Disc drive apparatus according to claim 2, wherein said control unit (90) is designed to enter (step 203) said FAN mode (SM2) if, at the completion of a write/read operation, said measuring signal (S_{T}) indicates a temperature (T) above a first threshold temperature (T1), for instance 60 °C.

4. Disc drive apparatus according to claim 2, wherein said control unit (90) is designed to monitor said measuring signal (S_{T}) during a write/read operation, to set (step 211) a first flag (FT1) in response to receiving the measuring signal (S_{T}) indicating a temperature (T) above a first threshold temperature (T1), for instance 60 °C, and to enter (step 214) said FAN mode (SM2) if, at the completion of a write/read operation, said first flag (FT1) is set.

5. Disc drive apparatus according to claim 4, wherein said control unit (90) is designed to monitor said measuring signal (S_{T}) during a write/read operation, and to reset (step 213) said first flag (FT1) in response to receiving the measuring signal (S_{T}) indicating a temperature (T) below said first threshold temperature (T1).

6. Disc drive apparatus according to any of claims 1-5, wherein said control unit (90) is designed to set, in said FAN mode (SM2), a rotational speed of said motor (4) at a predetermined safety value (ω2) selected for optimum cooling effect.

7. Disc drive apparatus according to any of claims 1-6, wherein said control unit (90) is designed to set, in said FAN mode (SM2), a rotational speed of said motor (4) at a predetermined safety value (ω2) selected for low audibility.

8. Disc drive apparatus according to any of claims 1-7, wherein said control unit (90) is designed to start (step 215) a first timer (TIM1) on transition to said FAN mode (SM2), and to exit said FAN mode (SM2) after a first predetermined time (p1) determined by said first timer (T1M1).

9. Disc drive apparatus according to claim 2, wherein said control unit (90) is designed to monitor said measuring signal (S_{T}) during a write/read operation, to set (step 222; step 232) a timer (TIM2; TIM3) in response to receiving the measuring signal (S_{T}) indicating a temperature (T) above a second threshold temperature (T2) higher than said first threshold temperature (T1), for instance 70 °C, and to enter said FAN mode (SM2) if, after a predetermined time (p2; p3) determined by said timer (TIM1; TIM3), said measuring signal (S_{T}) still indicates a temperature (T) above said second threshold temperature (T2).

10. Disc drive apparatus according to any of claims 1-9, wherein the control unit (90) is designed to be capable of operating in a duty cycle mode (DCM) in which the control unit (90) is alternatingly operative in a normal mode portion (NMP) during which writing/reading is performed, and in an energy saving mode portion (ESMP) during which writing/reading is temporarily suspended while rotation of said motor (4) is continued.

11. Disc drive apparatus according to claim 10, wherein the control unit (90) is designed to maintain the rotational speed of the motor (4) substantially constant during the duty cycle mode (DCM).

12. Disc drive apparatus according to claim 10 or 11, wherein the duty cycle mode (DCM) has a cycle duration selected in the range of 1-10 sec, preferably in the order of about 5 sec.

13. Disc drive apparatus according to any of claims 12-14, wherein the duty cycle mode (DCM) has a duty cycle in the order of about 50%.

14. Disc drive apparatus according to any of claims 10-13, comprising temperature measuring means (50) for generating a measuring signal (S_{T}) indicating a temperature (T) occurring within the disc drive apparatus, the temperature measuring means (50) preferably being arranged for measuring the temperature of a disc drive component; wherein said control unit (90) has a signal input (95) coupled to said temperature measuring means (50), and is designed to monitor said measuring signal (S_{T}) during a write/read operation, and to enter said duty cycle mode (DCM) in response to receiving the measuring signal (S_{T}) indicating a temperature (T) above a second threshold temperature (T2) higher than said first threshold temperature (T1).

15. Disc drive apparatus according to any of claims 10-14, comprising temperature measuring means (50) for generating a measuring signal (S_{T}) indicating a temperature (T) occurring within the disc drive apparatus, the temperature measuring means (50) preferably being arranged for measuring the temperature of a disc drive component; wherein said control unit (90) has a signal input (95) coupled to said temperature measuring means (50), and is designed to monitor said measuring signal (S_{T}) during a write/read operation, to set a timer in response to receiving the measuring signal (S_{T}) indicating a temperature (T) above said second threshold temperature (T2), and to enter said duty cycle mode (DCM) if, after a predetermined time determined by said timer, said measuring signal (S_{T}) still indicates a temperature (T) above a second threshold temperature (T2) higher than said first threshold temperature (T1).

16. Disc drive apparatus according to any of claims 1-15, wherein the control unit (90) is designed to be capable of operating in a first safety mode (SM1) during which writing/reading is performed at a first predetermined safety speed (ω1).

17. Disc drive apparatus according to claim 16 as far as depending on claim 15,
wherein said control unit (90) is designed to make a transition to said first safety mode (SM1) in response to receiving the measuring signal (S_{T}) indicating a temperature (T) above said second threshold temperature (T2), and to make a transition from said first safety mode (SM1) to said duty cycle mode (DCM) if, after said predetermined time determined by said timer, said measuring signal (S_{T}) still indicates a temperature (T) above said second threshold temperature (T2).

18. Disc drive apparatus according to any of the previous claims, wherein the disc drive apparatus is an optical disc drive apparatus comprising a controllable light beam generator (31), typically a laser; -
wherein said control unit (90) has a second output (92) for generating a control signal (S_{CL}) for said light beam generator (31);
and wherein the control unit (90) is designed to switch OFF said light beam generator (31) while operating in said FAN mode (SM2).

19. Disc drive apparatus according to claim 18, comprising temperature measuring means (50) for generating a measuring signal (S_{T}) indicating a temperature (T) occurring within the disc drive apparatus, the temperature measuring means (50) being arranged for measuring the temperature of said light beam generator (31).

20. Disc drive apparatus according to any of the previous claims, further comprising at least one controllable functional unit (40);
wherein said control unit (90) has a third output (94) for generating a control signal (S_{CU}) for said functional unit (40);
and wherein the control unit (90) is designed to switch OFF said functional unit (40) while operating in said FAN mode (SM2).

21. Disc drive apparatus according to any of the previous claims, wherein the control unit (90) is designed to be capable of operating in a FAN2 TURNTABLE (SM4) mode in which said motor (4) is rotated without a disc being present.

22. Disc drive apparatus according to claim 21, comprising temperature measuring means (50) for generating a measuring signal (S_{T}) indicating a temperature (T) occurring within the disc drive apparatus, the temperature measuring means (50) preferably being arranged for measuring the temperature of a disc drive component; wherein said control unit (90) has a signal input (95) coupled to said temperature measuring means (50), and is designed to enter (step 272) said FAN2 TURNTABLE (SM4) mode if, in an idle state with no disc loaded, said measuring signal (S_{T}) indicates a temperature (T) above a threshold temperature (T1), for instance 60 °C.

23. Disc drive apparatus according to any of claims 21 or 22, wherein said control unit (90) is designed to start (step 273) a fifth timer (TIM5) on transition to said FAN2 TURNTABLE (SM4) mode, and to exit said FAN2 TURNTABLE (SM4) mode after a fifth predetermined time (p5) determined by said fifth timer (TIM5).

## Patentansprüche

1. Plattenlaufwerk (1) zum Schreiben und/oder Lesen von Informationen auf eine und/oder von einer Platte (2), welches umfasst:
einen steuerbaren Motor (4), um eine Platte (2) in Rotation zu versetzen;
eine Steuereinheit (90) mit einem ersten Ausgang (91) zum Erzeugen eines Steuersignals
(S_{CM}) für den Motor (4);
wobei die Steuereinheit (90) so gestaltet ist, dass sie in der Lage ist, in einer LÜFTER-Betriebsart (SM2) zu arbeiten, in welcher der Motor (4) in Rotation versetzt wird, ohne dass Schreibvorgänge und ohne dass Lesevorgänge und ohne dass Stellvorgänge von dem Plattenlaufwerk ausgeführt werden.

2. Plattenlaufwerk nach Anspruch 1, welches ferner Temperaturmessmittel (50) zum Erzeugen eines Messsignals (S_{T}), das eine innerhalb des Plattenlaufwerks auftretende Temperatur (T) anzeigt, umfasst, wobei die Temperaturmessmittel (50) vorzugsweise dafür vorgesehen sind, die Temperatur einer Plattenlaufwerkskomponente zu messen;
wobei die Steuereinheit (90) einen mit den Temperaturmessmitteln (50) gekoppelten Signaleingang (95) aufweist und so gestaltet ist, dass sie in Reaktion auf das Messsignal (S_{T}), das von den Temperaturmessmitteln (50) empfangen wird, in die LÜFTER-Betriebsart (SM2) eintritt.

3. Plattenlaufwerk nach Anspruch 2, wobei die Steuereinheit (90) so gestaltet ist, dass sie in die LÜFTER-Betriebsart (SM2) eintritt (Schritt 203), falls bei Beendigung eines Lese-/Schreibvorgangs das Messsignal (S_{T}) eine Temperatur (T) anzeigt, die über einer ersten Schwelltemperatur (T1), zum Beispiel 60 °C, liegt.

4. Plattenlaufwerk nach Anspruch 2, wobei die Steuereinheit (90) so gestaltet ist, dass sie das Messsignal (S_{T}) während eines Lese-/Schreibvorgangs überwacht, um ein erstes Flag (FT1) in Reaktion auf das Empfangen des Messsignals (S_{T}) zu setzen (Schritt 211), das eine Temperatur (T) über einer ersten Schwelltemperatur (T1), zum Beispiel 60 °C, anzeigt, und in die LÜFTER-Betriebsart (SM2) eintritt (Schritt 214), falls bei Beendigung eines Lese-/Schreibvorgangs das erste Flag (FT1) gesetzt ist.

5. Plattenlaufwerk nach Anspruch 4, wobei die Steuereinheit (90) so gestaltet ist, dass sie das Messsignal (S_{T}) während eines Lese-/Schreibvorgangs überwacht und das erste Flag (FT1) in Reaktion auf das Empfangen des Messsignals (S_{T}) zurücksetzt (Schritt 213), welches eine Temperatur (T) unter der ersten Schwelltemperatur (T1) anzeigt.

6. Plattenlaufwerk nach einem der Ansprüche 1-5, wobei die Steuereinheit (90) so gestaltet ist, dass sie in der LÜFTER-Betriebsart (SM2) eine Drehzahl des Motors (4) auf einen vorbestimmten Sicherheitswert (ω2) einstellt, der im Hinblick auf eine optimale Kühlwirkung gewählt ist.

7. Plattenlaufwerk nach einem der Ansprüche 1-6, wobei die Steuereinheit (90) so gestaltet ist, dass sie in der LÜFTER-Betriebsart (SM2) eine Drehzahl des Motors (4) auf einen vorbestimmten Sicherheitswert (ω2) einstellt, der im Hinblick auf eine geringe Hörbarkeit gewählt ist.

8. Plattenlaufwerk nach einem der Ansprüche 1-7, wobei die Steuereinheit (90) so gestaltet ist, dass sie beim Übergang in die LÜFTER-Betriebsart (SM2) einen ersten Zeitgeber (TIM1) startet (Schritt 215) und die LÜFTER-Betriebsart (SM2) nach einer ersten vorbestimmten Zeit (p1), die durch den ersten Zeitgeber (TIM1) bestimmt wird, verlässt.

9. Plattenlaufwerk nach Anspruch 2, wobei die Steuereinheit (90) so gestaltet ist, dass sie das Messsignal (S_{T}) während eines Lese-/Schreibvorgangs überwacht, um einen Zeitgeber (TIM2; TIM3) in Reaktion auf das Empfangen des Messsignals (S_{T}) zu starten (Schritt 222; Schritt 232), das eine Temperatur (T) über einer zweiten Schwelltemperatur (T2) anzeigt, die höher als die erste Schwelltemperatur (T1) ist, zum Beispiel 70 °C, und in die LÜFTER-Betriebsart (SM2) eintritt, falls nach einer vorbestimmten Zeit (p2; p3), die durch den Zeitgeber (TIM2; TIM3) bestimmt wird, das Messsignal (S_{T}) noch immer eine Temperatur (T) über der zweiten Schwelltemperatur (T2) anzeigt.

10. Plattenlaufwerk nach einem der Ansprüche 1-9, wobei die Steuereinheit (90) so gestaltet ist, dass sie in der Lage ist, in einer Arbeitszyklus-Betriebsart (DCM) zu arbeiten, in welcher die Steuereinheit (90) abwechselnd in einem Normalbetriebs-Abschnitt (NMP), während welchem ein Schreiben/Lesen ausgeführt wird, und in einem Energiesparbetriebs-Abschnitt (ESMP), während welchem das Schreiben/Lesen zeitweilig unterbrochen wird, während die Rotation des Motors (4) fortgesetzt wird, arbeitet.

11. Plattenlaufwerk nach Anspruch 10, wobei die Steuereinheit (90) so gestaltet ist, dass sie die Drehzahl des Motors (4) während der Arbeitszyklus-Betriebsart (DCM) im Wesentlichen konstant hält.

12. Plattenlaufwerk nach Anspruch 10 oder 11, wobei die Arbeitszyklus-Betriebsart (DCM) eine Zyklusdauer, die im Bereich von 1-10 s gewählt ist, und vorzugsweise in der Größenordnung von ungefähr 5 s aufweist.

13. Plattenlaufwerk nach einem der Ansprüche 10-12, wobei die Arbeitszyklus-Betriebsart (DCM) einen Arbeitszyklus in der Größenordnung von ungefähr 50% hat.

14. Plattenlaufwerk nach einem der Ansprüche 10-13, welches Temperaturmessmittel (50) zum Erzeugen eines Messsignals (S_{T}), das eine innerhalb des Plattenlaufwerks auftretende Temperatur (T) anzeigt, umfasst, wobei die Temperaturmessmittel (50) vorzugsweise dafür vorgesehen sind, die Temperatur einer Plattenlaufwerkskomponente zu messen; wobei die Steuereinheit (90) einen mit den Temperaturmessmitteln (50) gekoppelten Signaleingang (95) aufweist und so gestaltet ist, dass sie das Messsignal (S_{T}) während eines Schreib-/Lesevorgangs überwacht und in Reaktion auf das Empfangen des Messsignals (S_{T}), das eine Temperatur (T) über einer zweiten Schwelltemperatur (T2) anzeigt, die höher als die erste Schwelltemperatur (T1) ist, in die Arbeitszyklus-Betriebsart (DCM) eintritt.

15. Plattenlaufwerk nach einem der Ansprüche 10-14, welches Temperaturmessmittel (50) zum Erzeugen eines Messsignals (S_{T}), das eine innerhalb des Plattenlaufwerks auftretende Temperatur (T) anzeigt, umfasst, wobei die Temperaturmessmittel (50) vorzugsweise dafür vorgesehen sind, die Temperatur einer Plattenlaufwerkskomponente zu messen; wobei die Steuereinheit (90) einen mit den Temperaturmessmitteln (50) gekoppelten Signaleingang (95) aufweist und so gestaltet ist, dass sie das Messsignal (S_{T}) während eines Schreib-/Lesevorgangs überwacht, in Reaktion auf das Empfangen des Messsignals (S_{T}), das eine Temperatur (T) über der zweiten Schwelltemperatur (T2) anzeigt, einen Zeitgeber startet, und in die Arbeitszyklus-Betriebsart (DCM) eintritt, falls nach einer vorbestimmten Zeit, die durch den Zeitgeber bestimmt wird, das Messsignal (S_{T}) noch immer eine Temperatur (T) über einer zweiten Schwelltemperatur (T2) anzeigt, die höher als die erste Schwelltemperatur (T1) ist.

16. Plattenlaufwerk nach einem der Ansprüche 1-15, wobei die Steuereinheit (90) so gestaltet ist, dass sie in der Lage ist, in einer ersten Sicherheitsbetriebsart (SM1) zu arbeiten, während welcher das Schreiben/Lesen mit einer ersten vorbestimmten Sicherheitsdrehzahl (ω1) ausgeführt wird.

17. Plattenlaufwerk nach Anspruch 16, sofern dieser von Anspruch 15 abhängig ist, wobei die Steuereinheit (90) so gestaltet ist, dass sie einen Übergang zu einer ersten Sicherheitsbetriebsart (SM1) in Reaktion auf das Empfangen des Messsignals (S_{T}), das eine Temperatur (T) über der zweiten Schwelltemperatur (T2) anzeigt, vollzieht und einen Übergang von der ersten Sicherheitsbetriebsart (SM1) zu der Arbeitszyklus-Betriebsart (DCM) vollzieht, falls nach der vorbestimmten Zeit, die durch den Zeitgeber bestimmt wird, das Messsignal (S_{T}) noch immer eine Temperatur (T) über der zweiten Schwelltemperatur (T2) anzeigt.

18. Plattenlaufwerk nach einem der vorhergehenden Ansprüche, wobei das Plattenlaufwerk ein optisches Plattenlaufwerk ist, das einen steuerbaren Lichtstrahlgenerator (31) umfasst, normalerweise einen Laser;
wobei die Steuereinheit (90) einen zweiten Ausgang (92) zum Erzeugen eines Steuersignals (S_{CL}) für den Lichtstrahlgenerator (31) aufweist;
und wobei die Steuereinheit (90) so gestaltet ist, dass sie den Lichtstrahlgenerator (31) ausschaltet, während sie in der LÜFTER-Betriebsart (SM2) arbeitet.

19. Plattenlaufwerk nach Anspruch 18, welches Temperaturmessmittel (50) zum Erzeugen eines Messsignals (S_{T}), das eine innerhalb des Plattenlaufwerks auftretende Temperatur (T) anzeigt, umfasst, wobei die Temperaturmessmittel (50) dafür vorgesehen sind, die Temperatur des Lichtstrahlgenerators (31) zu messen.

20. Plattenlaufwerk nach einem der vorhergehenden Ansprüche, welches ferner mindestens eine steuerbare Funktionseinheit (40) umfasst;
wobei die Steuereinheit (90) einen dritten Ausgang (94) zum Erzeugen eines Steuersignals (S_{CU}) für die Funktionseinheit (40) umfasst;
und wobei die Steuereinheit (90) so gestaltet ist, dass sie die Funktionseinheit (40) ausschaltet, während sie in der LÜFTER-Betriebsart (SM2) arbeitet.

21. Plattenlaufwerk nach einem der vorhergehenden Ansprüche, wobei die Steuereinheit (90) so gestaltet ist, dass sie in der Lage ist, in einer LÜFTER2-PLATTENTELLER- (FAN2 TURNTABLE) Betriebsart (SM4) zu arbeiten, in welcher der Motor (4) in Rotation versetzt wird, ohne dass eine Platte vorhanden ist.

22. Plattenlaufwerk nach Anspruch 21, welches Temperaturmessmittel (50) zum Erzeugen eines Messsignals (S_{T}), das eine innerhalb des Plattenlaufwerks auftretende Temperatur (T) anzeigt, umfasst, wobei die Temperaturmessmittel (50) vorzugsweise dafür vorgesehen sind, die Temperatur einer Plattenlaufwerkskomponente zu messen;
wobei die Steuereinheit (90) einen mit den Temperaturmessmitteln (50) gekoppelten Signaleingang (95) aufweist und so gestaltet ist, dass sie in die LÜFTER2-PLATTENTELLER- Betriebsart (SM4) eintritt (Schritt 272), falls in einem Ruhezustand, in dem keine Platte eingelegt ist, das Messsignal (S_{T}) eine Temperatur (T) anzeigt, die über einer Schwelltemperatur (T1), zum Beispiel 60 °C, liegt.

23. Plattenlaufwerk nach einem der Ansprüche 21 oder 22, wobei die Steuereinheit (90) so gestaltet ist, dass sie beim Übergang zu der LÜFTER2-PLATTENTELLER-Betriebsart (SM4) einen fünften Zeitgeber (TIM5) startet (Schritt 273) und nach einer fünften vorbestimmten Zeit (p5), die durch den fünften Zeitgeber (TIM5) bestimmt wird, die LÜFTER2-PLATTENTELLER- Betriebsart (SM4) verlässt.

## Revendications

1. Appareil lecteur de disque (1) permettant d'écrire des informations sur un disque (2) et/ou d'en extraire de celui-ci, comprenant :
un moteur contrôlable (4) pour entraîner un disque (2) en rotation;
une unité de commande (90) comportant une première sortie (91) pour générer un signal de commande (S_{CM}) pour ledit moteur (4);
dans lequel l'unité de commande (90) est conçue pour être capable de fonctionner dans un mode FAN (SM2) dans lequel ledit moteur (4) est entraîné en rotation sans opération d'écriture et sans opération de lecture et sans que des opérations d'asservissement ne soient exécutées par l'appareil lecteur de disque.

2. Appareil lecteur de disque suivant la revendication 1, comprenant en outre des moyens de mesure de la température (50) pour générer un signal de mesure (S_{T}) indiquant une température (T) relevée dans l'appareil lecteur de disque, les moyens de mesure de la température (50) étant de préférence à même de mesurer la température d'un composant du lecteur de disque;
dans lequel ladite unité de commande (90) comporte une entrée de signal (95) couplée auxdits moyens de mesure de température (50), et est conçue pour entrer dans ledit mode FAN (SM2) en réponse au signal de mesure (S_{T}) reçu desdits moyens de mesure de la température (50).

3. Appareil lecteur de disque suivant la revendication 2, dans lequel ladite unité de commande (90) est conçue pour entrer (étape 203) dans ledit mode FAN (SM2) si, au terme d'une opération d'écriture/lecture, ledit signal de mesure (S_{T}) indique une température (T) supérieure à une première température de seuil (T1), par exemple 60 °C.

4. Appareil lecteur de disque suivant la revendication 2, dans lequel ladite unité de commande (90) est conçue pour surveiller ledit signal de mesure (S_{T}) pendant une opération d'écriture/lecture, pour définir (étape 211) un premier drapeau (FT1) en réponse à la réception du signal de mesure (S_{T}) indiquant une température (T) supérieure à une première température de seuil (T1), par exemple 60 °C, et pour entrer (étape 214) dans ledit mode FAN (SM2) si, au terme d'une opération d'écriture/lecture, ledit premier drapeau (FT1) est défini.

5. Appareil lecteur de disque suivant la revendication 4, dans lequel ladite unité de commande (90) est conçue pour surveiller ledit signal de mesure (S_{T}) pendant une opération d'écriture/lecture, et pour redéfinir (étape 213) ledit premier drapeau (FT1) en réponse à la réception du signal de mesure (S_{T}) indiquant une température (T) inférieure à ladite première température de seuil (T1).

6. Appareil lecteur de disque suivant l'une quelconque des revendications 1 à 5, dans lequel ladite unité de commande (90) est conçue pour fixer, dans ledit mode FAN (SM2), une vitesse de rotation dudit moteur (4) à une valeur de sécurité prédéterminée (ω2) sélectionnée pour obtenir un effet de refroidissement optimal.

7. Appareil lecteur de disque suivant l'une quelconque des revendications 1 à 6, dans lequel ladite unité de commande (90) est conçue pour fixer, dans ledit mode FAN (SM2), une vitesse de rotation dudit moteur (4) à une valeur de sécurité prédéterminée (ω2) sélectionnée pour obtenir une faible audibilité.

8. Appareil lecteur de disque suivant l'une quelconque des revendications 1 à 7,
dans lequel ladite unité de commande (90) est conçue pour lancer (étape 215) un premier temporisateur (TIM1) lors de la transition vers ledit mode FAN (SM2), et pour quitter ledit mode FAN (SM2) après un premier temps prédéterminé (p1) déterminé par ledit premier temporisateur (TIM1).

9. Appareil lecteur de disque suivant la revendication 2, dans lequel ladite unité de commande (90) est conçue pour surveiller ledit signal de mesure (S_{T}) pendant une opération d'écriture/lecture, pour définir (étape 222; étape 232) un temporisateur (TIM2; TIM3) en réponse à la réception du signal de mesure (S_{T}) indiquant une température (T) supérieure à une deuxième température de seuil (T2) supérieure à ladite première température de seuil (T1), par exemple 70 °C, et pour entrer dans ledit mode FAN (SM2) si, après un temps prédéterminé (p2; p3) déterminé par ledit temporisateur (TIM1; TIM3), ledit signal de mesure (S_{T}) indique toujours une température (T) supérieure à ladite deuxième température de seuil (T2).

10. Appareil lecteur de disque suivant l'une quelconque des revendications 1 à 9, dans lequel l'unité de commande (90) est conçue pour être capable de fonctionner dans un mode rapport cyclique (DCM) dans lequel l'unité de commande (90) fonctionne alternativement dans une partie mode normal (NMP) pendant laquelle une opération d'écriture/lecture est exécutée, et dans une partie mode économie d'énergie (ESMP) pendant laquelle une opération d'écriture/lecture est temporairement suspendue tandis que la rotation dudit moteur (4) se poursuit.

11. Appareil lecteur de disque suivant la revendication 10, dans lequel l'unité de commande (90) est conçue pour maintenir la vitesse de rotation du moteur (4) sensiblement constante en mode rapport cyclique (DCM).

12. Appareil lecteur de disque suivant la revendication 10 ou 11, dans lequel le mode rapport cyclique (DCM) a une durée de cycle sélectionnée dans l'intervalle compris entre 1 et 10 s, de préférence de l'ordre de 5 s environ.

13. Appareil lecteur de disque suivant l'une quelconque des revendications 12 à 14, dans lequel le mode rapport cyclique (DCM) a un rapport cyclique de l'ordre de 50 % environ.

14. Appareil lecteur de disque suivant l'une quelconque des revendications 10 à 13, comprenant des moyens de mesure de la température (50) pour générer un signal de mesure (S_{T}) indiquant une température (T) relevée dans l'appareil lecteur de disque, les moyens de mesure de la température (50) étant de préférence à même de mesurer la température d'un composant de lecteur de disque; dans lequel ladite unité de commande (90) comporte une entrée de signal (95) couplée auxdits moyens de mesure de la température (50), et est conçue pour surveiller ledit signal de mesure (S_{T}) pendant une opération d'écriture/lecture, et pour entrer dans ledit mode rapport cyclique (DCM) en réponse à la réception du signal de mesure (S_{T}) indiquant une température (T) supérieure à une deuxième température de seuil (T2) supérieure à ladite première température de seuil (T1).

15. Appareil lecteur de disque suivant l'une quelconque des revendications 10 à 14, comprenant des moyens de mesure de la température (50) pour générer un signal de mesure (S_{T}) indiquant une température (T) relevée dans l'appareil lecteur de disque, les moyens de mesure de la température (50) étant de préférence à même de mesurer la température d'un composant de lecteur de disque; dans lequel ladite unité de commande (90) comporte une entrée de signal (95) couplée auxdits moyens de mesure de la température (50), et est conçue pour surveiller ledit signal de mesure (S_{T}) pendant une opération d'écriture/lecture, pour définir un temporisateur en réponse à la réception du signal de mesure (S_{T}) indiquant une température (T) supérieure à ladite deuxième température de seuil (T2), et pour entrer dans ledit mode rapport cyclique (DCM) si, après un temps prédéterminé déterminé par ledit temporisateur, ledit signal de mesure (S_{T}) indique toujours une température (T) supérieure à une deuxième température de seuil (T2) supérieure à ladite première température de seuil (T1).

16. Appareil lecteur de disque suivant l'une quelconque des revendications 1 à 15, dans lequel l'unité de commande (90) est conçue pour être capable de fonctionner dans un premier mode de sécurité (SM1) pendant lequel une opération d'écriture/lecture est exécutée à une première vitesse de sécurité prédéterminée (ω1).

17. Appareil lecteur de disque suivant la revendication 16 dans la mesure où elle dépend de la revendication 15, dans lequel ladite unité de commande (90) est conçue pour effectuer une transition vers ledit premier mode de sécurité (SM1) en réponse à la réception du signal de mesure (S_{T}) indiquant une température (T) supérieure à ladite deuxième température de seuil (T2), et pour effectuer une transition dudit premier mode de sécurité (SM1) vers ledit mode rapport cyclique (DCM) si, après ledit temps prédéterminé déterminé par ledit temporisateur, ledit signal de mesure (S_{T}) indique toujours une température (T) supérieure à ladite deuxième température de seuil (T2).

18. Appareil lecteur de disque suivant l'une quelconque des revendications précédentes, dans lequel l'appareil lecteur de disque est un appareil lecteur de disque optique comprenant un générateur de faisceau lumineux contrôlable (31), typiquement un laser;
dans lequel ladite unité de commande (90) comporte une deuxième sortie (92) pour générer un signal de commande (S_{CL}) pour ledit générateur de faisceau lumineux (31), et
dans lequel l'unité de commande (90) est conçue pour couper ledit générateur de faisceau lumineux (31) en fonctionnant dans ledit mode FAN (SM2).

19. Appareil lecteur de disque suivant la revendication 18, comprenant des moyens de mesure de la température (50) pour générer un signal de mesure (S_{T}) indiquant une température (T) relevée dans l'appareil lecteur de disque, les moyens de mesure de la température (50) étant à même de mesurer la température dudit générateur de faisceau lumineux (31).

20. Appareil lecteur de disque suivant l'une quelconque des revendications précédentes, comprenant en outre au moins une unité fonctionnelle contrôlable (40);
dans lequel ladite unité de commande (90) comporte une troisième sortie (94) pour générer un signal de commande (S_{CU}) pour ladite unité fonctionnelle (40), et
dans lequel l'unité de commande (90) est conçue pour couper ladite unité fonctionnelle (40) en fonctionnant dans ledit mode FAN (SM2).

21. Appareil lecteur de disque suivant l'une quelconque des revendications précédentes, dans lequel l'unité de commande (90) est conçue pour être capable de fonctionner dans un mode FAN2 TURNTABLE (SM4) dans lequel ledit moteur (4) est entraîné en rotation sans qu'un disque ne soit présent.

22. Appareil lecteur de disque suivant la revendication 21, comprenant des moyens de mesure de la température (50) pour générer un signal de mesure (S_{T}) indiquant une température (T) relevée dans l'appareil lecteur de disque, les moyens de mesure de la température (50) étant de préférence à même de mesurer la température d'un composant du lecteur de disque;
dans lequel ladite unité de commande (90) comporte une entrée de signal (95) couplée auxdits moyens de mesure de la température (50), et est conçue pour entrer (étape 272) dans ledit mode FAN2 TURNTABLE (SM4) si, dans un état inactif sans qu'un disque ne soit chargé, ledit signal de mesure (S_{T}) indique une température (T) supérieure à une température de seuil (T1), par exemple 60 °C.

23. Appareil lecteur de disque suivant l'une quelconque des revendications 21 ou 22, dans lequel ladite unité de commande (90) est conçue pour lancer (étape 273) un cinquième temporisateur (TIM5) lors de la transition vers ledit mode FAN2 TURNTABLE (SM4), et pour quitter ledit mode FAN2 TURNTABLE (SM4) après un cinquième temps prédéterminé (p5) déterminé par ledit cinquième temporisateur (TIM5).
